# EUROPÄISCHE PATENTANMELDUNG

(11) **EP 1 116 509 A1**
(43) Veröffentlichungstag der Anmeldung: **18.07.2001**
(21) Anmeldenummer: 00118490.2
(22) Anmeldetag: 25.08.2000
(51) Int. Cl.: B01D 35/02, G01N 1/00, G01N 1/14

(54) **Filtervorrichtung**

(30) Priorität: 12.01.2000 DE 10000908
(71) Anmelder: Bran + Lübbe GmbH, D-22844 Norderstedt (DE)
(72) Erfinder: Kändler, Holm, 22305 Hamburg (DE)
(74) Vertreter: Kloiber, Thomas, Dr. Dipl.-Phys.

(57) **Zusammenfassung**

Eine Filtervorrichtung (1) zur Filtration von Fluiden, insbesondere bei der Entnahme gefilterter Probenflüssigkeit für Meßzwecke aus Behältern und Rohrleitungen, wird im Hinblick auf eine sterile Handhabung der Probenflüssigkeit bei geringem apparativen Aufwand durch einen geschlossenen Fluidkreislauf verbessert, der mindestens ein erstes Filterelement (4), eine Flüssikeitspumpe (27) und ein zweites Filterelement (5) umfaßt, wobei die Probenflüssigkeit über das erste Filterelement (4) aus dem Behälter oder der Rohrleitung angesaugt und über das zweite Filterelement (5) in den Behälter oder die Rohrleitung zurückgepumpt wird oder umgekehrt.

## Beschreibung

Die Erfindung betrifft eine Filtervorrichtung zur Filtration von Fluiden, insbesondere bei der Entnahme gefilterter Probenflüssigkeit für Meßzwecke aus Behältern und Rohrleitungen.

Es sind Filtervorrichtung bekannt, bei denen die Probenflüssigkeit für Meßzwecke aus Behältern und Rohrleitungen entnommen und nach der Messung verworfen wird. Dies hat den Nachteil, daß die Probenflüssigkeit verloren ist. Weitere Nachteile bekannter Filtervorrichtungen bestehen darin, daß für Reinigungszwecke ein großer Durchsatz von Probenflüssigkeit und ein großer Aufwand für die Probenvorbereitung erforderlich ist oder daß der Installationsaufwand hoch ist. Andere Filtervorrichtungen haben den Nachteil einer geringen Filterungsrate oder eines nicht vollständigen Austausches der Probenflüssigkeit bei einem Wechsel der Probenflüssigkeiten. Häufig ist ein steriler Betrieb nur mit erhöhtem apparativen Aufwand möglich.

Aufgabe der Erfindung ist es, eine Filtervorrichtung anzugeben, bei der eine sterile Handhabung der Probenflüssigkeit bei geringem apparativen Aufwand möglich ist.

Diese Aufgabe löst die Erfindung dadurch, daß die Filtervorrichtung einen geschlossenen Fluidkreislauf aufweist, der mindestens ein erstes Filterelement, eine Flüssigkeispumpe und ein zweites Filterelement umfaßt, wobei die Probenflüssigkeit über das erste Filterelement aus dem Behälter oder der Rohrleitung angesaugt und über das zweite Filterelement in den Behälter oder die Rohrleitung zurückgepumpt wird oder umgekehrt. Die erfindungsgemäße Filtervorrichtung hat den Vorteil, daß durch die Messung keine Probenflüssigkeit verbraucht wird, da diese in einem geschlossenen Fluidkreislauf in den Behälter oder die Rohrleitung, aus der sie entnommen wurde, stets wieder zurückgeführt wird. Die Filterelemente sind in der Lage, Schmutzpartikel und insbesondere Bakterien zurückzuhalten und sorgen somit für eine sterile Probenflüssigkeit. Aufgrund des geschlossenen Fluidkreislaufs kann die Probenflüssigkeit auch im weiteren Verlauf durch das Filtersystem nicht kontaminiert werden.

In Weiterbildung der Erfindung ist vorgesehen, daß die Pumprichtung umkehrbar ist. Durch die Umkehrung der Pumprichtung lässt sich eine Reinigungswirkung erzielen, denn die während der ursprünglichen Pumprichtung beispielsweise vom ersten Filter augefilterten und an diesem anhaftenden Partikel und Bakterien werden bei umgekehrter Pumprichtung weggespült und der erste Filter somit gereinigt. Durch diese Maßnahme läßt sich somit die Standzeit der Filtervorrichtung mit Vorteil erhöhen, insbesondere wenn der Umkehrungsvorgang im zeitlichen Abstand mehrmals wiederholt wird.

Die Erfindung kann dadurch noch verbessert werden, daß die Pumprichtung selbsttätig umkehrbar ist, vorzugsweise periodisch. Diese einfache Maßnahme erspart das manuelle Umschalten der Pumpe und sorgt für einen langen störungsfreien Betrieb, da das Umschalten somit auch nicht vergessen werden kann.

Durch die Maßnahme, daß die Filterelemente austauschbar sind und daß die Filterfeinheit und der Volumenstrom durch die Filtervorrichtung durch Austauschen verschieden ausgestalteter Filterelemente einstellbar sind, kann die Filtervorrichutng mit Vorteil ohne großen Aufwand an verschiedene Erfordernisse des Meßbetriebs angepasst werden.

Eine bevorzugte Ausführungsform der Erfindung sieht vor, daß die Vorrichtungselemente auf einem gemeinsamen Baugruppenträger montiert sind. Damit ergibt sich ein kompakter Aufbau der Filtervorrichtung, der somit nur wenig Probenflüssigkeit erfordert, flexibel ist und weitere vorteilhafte Ausgestaltungsformen erlaubt.

In einer besonders einfachen, kostengünstigen und zweckmäßigen Ausführungsform ist der Baugruppenträger als Tragerohr ausgestaltet.

In Ausgestaltung der Erfindung sind auf dem Tragerohr ein Sondenflansch, ein Prozeßflansch, ein erstes rohrförmiges Filterelement, ein Trennring oder O-Ring, ein zweites rohrförmiges Filterelement und eine in das Rohrende eingeschraubte Verschlußschraube angeordnet. Diese einfachen Formen haben den Vorteil, daß die Bauelemente mit geringem Aufwand herstellbar, leicht sauberzuhalten und auf einfache Weise montierbar sind, indem sie in der angegebenen Reihenfolge einfach auf das Tragerohr aufgesteckt und durch die Verschlussschraube miteinander fest verbunden werden. Außerdem hat die rohrförmige Ausgestaltung der Filterelemente den Vorteil einer relativ großen Filterfläche, die einen großen Volumendurchsatz erlaubt.

Ein weiterer Vorteil der beschriebenen Ausgestaltung besteht darin, daß die Bauelememte leicht ausgetauscht werden können, und zwar nicht nur bei Ersatzbedarf. Insbesondere die Filterelemente können hier gegen andere Filterelemente mit anderen Eigenschaften ausgetauscht werden, beispielsweise mit anderer Filterfeinheit und anderem Volumenstrom, wenn ein stärkerer oder schwächerer Durchsatz von Probenflüssigkeit gewünscht wird.

Der Trennring hat die Aufgabe ein direktes Übertreten von Probenflüssigkeit aus dem Zuflußbereich in den Abflußbereich zu verhindern. Dies erfolgt insbesondere durch Abdichtung der beiden radial innerhalb der rohrförmigen Filterelemente angeordneten Ringräume voneinander, aber auch durch Abdichtung der Stirnseiten der Filterelemente, so dass hier keine Flüssigkeit austreten kann. Für diesen Zweck ist der Trennring relativ aufwendig ausgestaltet und besteht beispielsweise aus einem profilierten Metallring, der mit vier O-Ringdichtungen versehen ist. Wenn allerdings Filterelemente mit bauartbedingter Abdichtung der Stirnseiten verwendet werden, kann der Trennring durch einen einfachen O-Ring ersetzt werden, der nun nur noch die beiden genannten Ringräume gegeneinander abdichten muß.

Der Anschluß von Fluidleitungen zur Pumpe hin und zurück wird vereinfacht durch die Maßnahme, daß der Sondenflansch und der Prozeßflansch jeweils mit einer Anschlußbohrung für den Zu- und Abfluß von Probenflüssigkeit versehen ist.

Mit Vorteil ist innerhalb der Filtervorrichtung eine Meßanordnung integriert. Diese Maßnahme nutzt den Umstand, daß der Fluidstrom innerhalb der Filtervorrichtung ohne zusätzlichen apparativen Aufwand zugänglich ist. Durch die Einsparung von Umleitungen zur Messanordnung ist die Gesamtmenge der zirkulierenden Probenflüssigkeit vorteilhaft gering.

Es wird empfohlen, daß die Meßanordnung eine optische Sonde umfasst, denn mittels optischer Sonden lassen sich viele Eigenschaften der Probenflüssigkeit ohne chemische Veränderung derselben ermitteln.

Aufgrung der Enge in der erfindungsgemäßen Filtervorrichtung ist es besonders zweckmäßig, wenn eine Meßsonde innerhalb des Tragerohrs angeordnet ist, da somit der hier noch zur Verfügung stehende Einbauraum nutzbringend verwendet werden kann.

Durch die Maßnahme, daß die optische Sonde im wesentlichen eine zylindrische Form aufweist und daß sie an ihrem im Bereich der Verschlußschraube angeordneten freien Ende mit einer Distanzhülse versehen ist, wird einerseits die Sonde im Tragerohr zentriert und in einer definierten Position fixiert, was insbesondere bei optischen Messungen von Vorteil ist. Andererseits wird hierdurch der Totraum innerhalb des Tragerohrs und die insgesamt zirkulierende Flüssigkeitsmenge verkleinert.

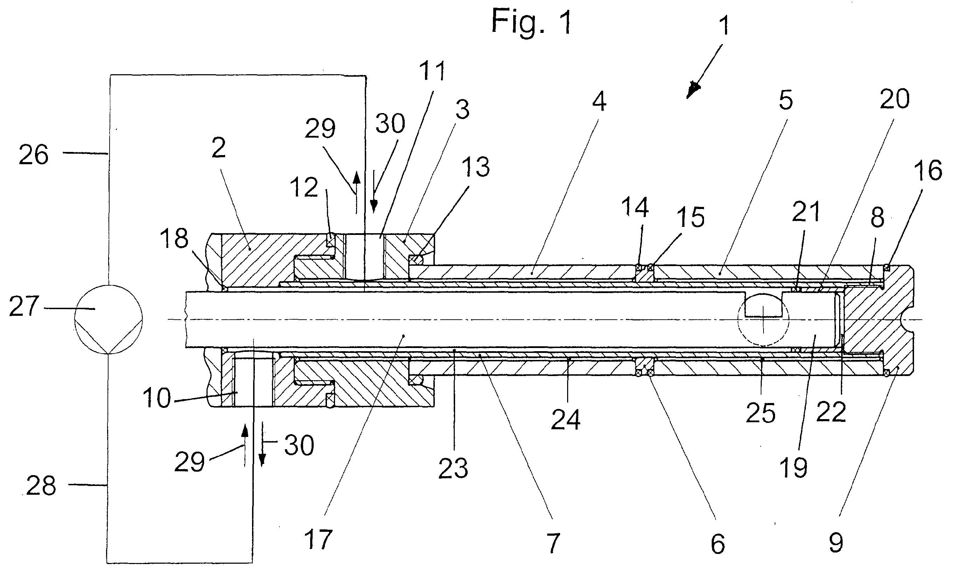

Ein Ausführungsbeispiel der Erfindung wird nachfolgend anhand der Zeichnung näher erläutert. Dabei zeigt die einzige
- Figur 1:: eine erfindungsgemäße Filtervorrichtung, teilweise im Schnitt, teilweise in schematischer Darstellung.

In der Figur erkennt man den Aufbau der Filtervorrichtung 1, bei der ein Sondenflansch 2, ein Prozeßflansch 3, ein erstes rohrförmiges Filterelement 4, ein Trennring 6 und ein zweites rohrförmiges Filterelement 5 in der genannten Reihenfolge auf ein als Baugruppenträger dienendes Tragerohr 7 aufgesteckt und mittels einer in das Rohrende 8 des Tragerohrs 7 eingeschraubten Verschlussschraube 9 fest miteinander verbunden sind. Alle genannten Bauteile sind jeweis mit Dichtringen 12, 13, 14, 15, 16 gegeneinander abgedichtet.

Zum Zusammenbau der Filtervorrichtung 1 werden die genannten Bauteile in der genannten Reihenfolge unter Einfügen der jeweiligen Dichtringe auf das Tragerohr 7 aufgesteckt und die Verschlußschraube 9 in das Rohrende 8 eingeschraubt. Entsprechend einfach erfolgt das Zerlegen der Filtervorrichtung 1 in umgekehrter Reihenfolge. Dabei können die Filterelemente 4, 5 auf einfache Weise gegen andere mit anderen Eigenschaften ausgetauscht werden, beispielsweise wenn eine andere Filterfeinheit oder ein anderer Volumenstrom gewünscht wird.

Im Inneren des Tragerohrs 7 der Filtervorrichtung 1 ist eine Meßanordnung in Form einer im wesentlichen zylindrischen optischen Sonde 17 angeordnet, die im Bereich des Sondenflansches 2 mittels eines Dichtrings 18 abgedichtet ist. Mit ihrem freien Ende 19 ist die Sonde 17 in eine an die Verschlußschraube 9 angrenzende, innerhalb des Tragerohrs 7 angeordnete Distanzhülse 20 eingeschoben und wird durch diese zentriert. Der Totraum 22 im Bereich der Distanzhülse 20 ist mittels eines weiteren Dichtrings 21 abgedichtet, der an die Distanzhülse 20 angrenzend zwischen Tragerohr 7 und Sonde 17 angeordnet ist.

Der Sondenflansch 2 ist mit einer Anschlußbohrung 10 für den Zu- und Abfluß von Probenflüssigkeit versehen. Eine entsprechende Anschlußbohrung 11 ist am Prozeßflansch 3 vorgesehen. An der Anschlußbohrung 10 des Sondenflansches 2 ist eine erste Pumpleitung 26 angeschlossen, die zu einer Flüssigkeitspumpe 27 führt. Von der Flüssigkeitspumpe 27 führt eine zweite Pumpleitung 28 zur Anschlußbohrung 11 des Prozeßflansches 3. Die Anschlußbohrung 10 des Sondenflansches 2 mündet in einen inneren Ringraum 23, der zwischen der Sonde 17 und dem Tragerohr 7 ausgebildet ist. Die Anschlußbohrung 11 des Prozeßflansches 3 mündet in einen ersten äußeren Ringraum 24, der zwischen dem ersten Filterelement 4 und dem Tragerohr 7 ausgebildet ist. Ein zweiter äußerer Ringraum 25 ist zwischen dem zweiten Filterelement 5 und dem Tragerohr 7 ausgebildet. Der erste äußere Ringraum 24 ist durch den Trennring 6 vom zweiten äußeren Ringraum 25 getrennt, so daß die Probenflüssigkeit nicht direkt übertreten kann.

Während des Betriebs steckt die Filtervorrichtung 1 in einem nicht gezeigten Behälter oder einer Rohrleitung, so daß die beiden Filterelemente 4, 5 von der zu untersuchenden Flüssigkeit umgeben sind. Nach Inbetriebnahme der Flüssigkeitspumpe 27 pumpt diese beispielsweise die Probenflüssigkeit in Richtung der Pfeile 29, so daß die zu untersuchende Flüssigkeit durch des Filterelement 4 angesaugt und gefiltert wird. Dabei lagern sich Feststoffpartikel und Bakterien auf der Außenseite des Filterelements 4 ab und gelangen nicht ins Innere der Filtervorrichtung 1. Die gefilterte Probenflüssigkeit gelangt somit in den ersten äußeren Ringraum 24, von wo sie über die Anschlußbohrung 11 des Prozeßflansches 3 und die erste Pumpleitung 26 in die Flüssigkeitspumpe 27 fließt und von dieser weiter durch die zweite Pumpleitung 28 über die Anschlußbohrung 10 des Sondenflansches 2 in den inneren Ringraum 23 gepumpt wird. Dort kann die optische Messung der Eigenschaften der Probenflüssigkeit erfolgen, bis diese den zweiten äußeren Ringraum 25 erreicht und durch das zweite Filterelement 5 hindurch radial nach außen in den oben genannten und nicht dargestellten Behälter oder die Rohrleitung zurückgeführt wird. Damit ist der Fluidkreislauf geschlossen und es geht keine Flüssigkeit verloren.

Nach einer bestimmten Betriebsdauer wird die Pumprichtung der Flüssigkeitspumpe 27 mittels einer nicht gezeigten Steuervorrichtung umgekehrt, so daß sich die Probenflüssigkeit nunmehr in Richtung der Pfeile 30 bewegt. Die Flüssigkeit wird somit über das zweite Filterelement 5 angesaugt und gelangt auf umgekehrtem Weg bis zum ersten Filterelement 4, welches von der Probenflüssigkeit radial von innen nach außen durchströmt wird. Dabei werden die beim vorangegangenen Meßbetrieb auf der Außenseite des ersten Filterelements 4 abgelagerten Feststoffpartikel und Bakterien weggespült, so daß für den weiteren Betrieb wieder eine saubere Außenfläche zur Verfügung steht.

Die Erfindung stellt somit ein Filtersystem zur Filtration von Fluiden in Labor-, Prozeß-, und Umweltanwendungen in Behältern und Rohrleitungen mit integrierter Meßanordnung zur Verfügung, welches die sterile Filterung und den vollständigen Austausch von Fluid bei geschlossenem Fluidkreislauf gewährleistet und gleichzeitig die Möglichkeit bietet, Filterfeinheit und Volumenstrom zu variieren. Dadurch können neue Anwendungsbereiche erschlossen werden.

Die erfindungsgemäße Filtervorrichtung hat zahlreiche Vorteile. Die zu untersuchende Flüssigkeit wird nicht verbraucht. Durch großen Volumendurchdsatz werden kurze Meßzyklen ermöglcht. Infolge des Selbstreinigungseffektes ergeben sich hohe Standzeiten. Die Vorrichtung ist robust, einfach zu handhaben und zu warten und weist eine hohe Beständigkeit gegenüber chemischen und physikalischen Einflüssen auf.

### Bezugszeichenliste

- 1: Filtervorrichtung
- 2: Sondenflansch
- 3: Prozeßflansch
- 4: erstes Filterelement
- 5: zweites Filterelement
- 6: Trennring
- 7: Tragerohr
- 8: Rohrende
- 9: Verschlußschraube
- 10: Anschlußbohrung
- 11: Anschlußbohrung
- 12: Dichtring
- 13: Dichtring
- 14: Dichtring
- 15: Dichtring
- 16: Dichtring
- 17: Sonde
- 18: Dichtring
- 19: freies Ende
- 20: Distanzhülse
- 21: Dichtring
- 22: Totraum
- 23: innerer Ringraum
- 24: erster äußerer Ringraum
- 25: zweiter äußerer Ringraum
- 26: erste Pumpleitung
- 27: Flüssigkeitspumpe
- 28: zweite Pumpleitung
- 29: Pfeil
- 30: Pfeil

## Patentansprüche

1. Filtervorrichtung zur Filtration von Fluiden, insbesondere bei der Entnahme gefilterter Probenflüssigkeit für Meßzwecke aus Behältern und Rohrleitungen, **gekennzeichnet durch** einen geschlossenen Fluidkreislauf, der mindestens ein erstes Filterelement (4), eine Flüssikeitspumpe (27) und ein zweites Filterelement (5) umfaßt, wobei die Probenflüssigkeit über das erste Filterelement (4) aus dem Behälter oder der Rohrleitung angesaugt und über das zweite Filterelement (5) in den Behälter oder die Rohrleitung zurückgepumpt wird oder umgekehrt.

2. Filtervorrichtung nach Anspruch 1, **dadurch gekennzeichnet**, daß die Pumprichtung umkehrbar ist.

3. Filtervorrichtung nach Anspruch 2, **dadurch gekennzeichnet**, daß die Pumprichtung selbsttätig umkehrbar ist, vorzugsweise periodisch.

4. Filtervorrichtung nach einem der vorhergehenden Ansprüche, **dadurch gekennzeichnet**, daß die Filterelemente (4, 5) austauschbar sind und daß die Filterfeinheit und der Volumenstrom durch die Filtervorrichtung (1) durch Austauschen verschieden ausgestalteter Filterelemente (4, 5) einstellbar sind.

5. Filtervorrichtung nach einem der vorhergehenden Ansprüche, **dadurch gekennzeichnet**, daß die Vorrichtungselemente (2, 3, 4, 5, 6, 9) auf einem gemeinsamen Baugruppenträger (7) montiert sind.

6. Filtervorrichtung nach Anspruch 5, **dadurch gekennzeichnet**, daß der Baugruppenträger als Tragerohr (7) ausgestaltet ist.

7. Filtervorrichtung nach Anspruch 5 oder 6, d a**durch gekennzeichnet**, daß auf dem Tragerohr (7) ein Sondenflansch (2), ein Prozessflansch (3), ein erstes rohrförmiges Filterelement (4), ein Trennring (6) oder O-Ring, ein zweites rohrförmiges Filterelement (5) und eine in das Rohrende (8) eingeschraubte Verschlußschraube (9) angeordnet sind.

8. Filtervorrichtung nach Anspruch 7, **dadurch gekennzeichnet**, daß der Sondenflansch (2) und der Prozeßflansch (3) jeweils mit einer Anschlußbohrung (10, 11) für den Zu- und Abfluß von Probenflüssigkeit versehen sind.

9. Filtervorrichtung nach einem der vorhergehenden Ansprüche, **dadurch gekennzeichnet**, daß innerhalb der Filtervorrichtung (1) eine Meßanordnung (17) integriert ist.

10. Filtervorrichtung nach Anspruch 9, **dadurch gekennzeichnet**, daß die Meßanordnung eine optische Sonde (17) umfaßt.

11. Filtervorrichtung nach Anspruch 9 oder 10, **dadurch gekennzeichnet**, daß eine Meßsonde (17) innerhalb des Tragerohrs (7) angeordnet ist.

12. Filtervorrichtung nach Anspruch 11, **dadurch gekennzeichnet**, daß die optische Sonde (17) im wesentlichen eine zylindrische Form aufweist und daß sie an ihrem im Bereich der Verschlußschraube (9) angeordneten freien Ende (19) mit einer Distanzhülse (20) versehen ist.
